# NEUE EUROPÄISCHE PATENTSCHRIFT

(11) **EP 0 902 918 B2**
(45) Veröffentlichungstag und Bekanntmachung des Hinweises auf die Entscheidung über den Einspruch: **12.01.2005**
(45) Hinweis auf die Patenterteilung: 06.09.2000
(21) Anmeldenummer: 97927135.0
(22) Anmeldetag: 05.06.1997
(51) Int. Cl.: G05B 19/23

(54) **REGELEINRICHTUNG UND -VERFAHREN FÜR MOTOREN**
MOTOR-REGULATING DEVICE AND METHOD
PROCEDE ET DISPOSITIF DE REGULATION POUR MOTEURS

(30) Priorität: 05.06.1996 DE 19622699
(43) Veröffentlichungstag der Anmeldung: 24.03.1999
(73) Patentinhaber: Siemens Linear Motor Systems GmbH & Co. KG, 80997 München (DE)
(72) Erfinder: SIENZ, Michael, D-51491 Overath (DE); KOEPP, Siegfried, D-64153 Mühltal (DE); STOIBER, Dietmar, D-82031 Grünwald (DE)
(74) Vertreter: Berg, Peter, Dipl.-Ing.
(86) Internationale Anmeldenummer: PCT/EP1997/002910
(87) Internationale Veröffentlichungsnummer: WO 1997/046924

(56) Entgegenhaltungen:
- EP-A- 0 604 666
- EP-A- 0 723 137
- WO-A-85/05710
- WO-A-97/12305
- DE-A- 19 605 413
- DE-A1- 3 231 966
- DE-C2- 2 314 257
- DE-C2- 3 526 166
- GB-A- 1 142 774
- US-A- 2 020 780
- US-A- 3 631 272
- US-A- 3 867 656
- US-A- 5 063 335
- PATENT ABSTRACTS OF JAPAN vol. 015, no. 083 (P-1171), 26.Februar 1991 & JP 02 297611 A (FANUC LTD), 10.Dezember 1990,

## Beschreibung

Die Erfindung bezieht sich auf eine Regeleinrichtung für einen Motor von der im Oberbegriff des Patentanspruchs 1 angegebenen Art sowie auf ein Verfahren zur Steuerung eines Motors.

Regeleinrichtungen zum Betrieb von Motoren sind allgemein bekannt. Zu diesem Zweck wird beispielsweise über einen Sensor der Bewegungszustand bzw. die Lage des Motors ermittelt und der Regeleinrichtung zugeführt, die den Motor abhängig von der Differenz zwischen Soll- und Istwert der Motorparameter betreibt. Auf diese Weise können auch zeitlich veränderliche Vorgabewerte wie Lage, Geschwindigkeit oder Beschleunigung relativ genau eingehalten werden.

In DE 2 314 257 C wird eine Schaltungsanordnung zur Drehzahlregelung gemäß dem Oberbegriff von Anspruch 1 beschrieben. Bei der Schaltungsanordnung zur Drehzahlregelung erfasst ein Sensor an der Kraftübertragungsschnittstelle des Motors einen Zustandsparameter des Kraftübertragungsmediums des Motors.

Im Zuge der technischen Weiterentwicklung werden jedoch die Anforderungen an die Präzision der Regelung von beispielsweise Elektromotoren, aber auch Fluid- oder Verbrennungsmotoren, immer höhere Anforderungen gestellt.

Insbesondere bei modernen Fertigungsautomaten wie Geräten zum Bonden, Bestückungsautomaten, Fräsmaschinen und dergleichen müssen einander widersprechende Anforderungen von einer Regeleinrichtung erfüllt werden.

So muss ein Bestückungsautomat zur Bestückung von Schaltungsplatinen mit elektronischen Bauelementen eine Punkt-zu-Punkt-Bewegung ausführen, bei einer einerseits der Punkt zum Einsetzen des Bauelementes sehr genau angesteuert werden muss, andererseits die Punkt-zu-Punkt-Bewegung mit hoher Geschwindigkeit erfolgen soll, was, bedingt durch die Beschleunigungen und Abbremsungen, zu Schwingungen im System führt, die wiederum die Genauigkeit bei der Positionierung beeinträchtigen. Dies gilt auch für moderne Fräsmaschinen, bei denen ein relativ kleiner Fräskopf für verschieden große Fräsöffnungen und -konturen verwendet wird. Auch hier muß eine große Lagegenauigkeit mit einer hohen Geschwindigkeit bzw. Beschleunigung des Fräskopfes verbunden werden.

Bei herkömmlichen Werkzeugmaschinen wie Fräsmaschinen oder dergleichen oder auch bei Bestükkungsautomaten werden als translatorische Antriebe Kugelrollspindelantriebe verwendet, bei denen ein Elektromotor eine Kugelrollspindel antreibt, die ihrerseits einen Werkzeugtisch oder einen Werkstücktisch verschiebt. Die Motorregelung erfolgt dann einerseits über einen Drehgeber am Motor sowie über einen Linearmaßstab am Werkzeugtisch.

Dabei hat sich jedoch gezeigt, daß alle mechanischen Bauelemente des Kugelrollspindelantriebs einen nachteiligen Einfluß auf die Regelstrecke ausüben, d. h. Zeitverzögerungen aufgrund der Elastizitätseigenschaften der Spindel, der Schwingungen des Werkstücks oder des Werkzeugtisches etc. wirken sich als Phasendrehungen in der Regelstrecke aus, was zu einem Schwingungsproblem führt.

In einem gewissen Ausmaß kann dieses Problem durch Einsatz von Direktantrieben, d. h. elektromagnetischen Linearmotoren, vermindert werden, da z. B. das mechanische Element der Kugelrollspindel bei einem linearen Direktantrieb entfällt. Allerdings ist auch hier zu beachten, daß alle mechanischen Elemente wie die Aufhängung des Fräskopfes, des Werkstücktisches etc. einen nachteiligen Einfluß auf die Regelstrecke ausüben, wenn auch in reduziertem Maß. Darüberhinaus werden auch Einflüsse der Regelschaltung selbst wichtig. Bei einer Geschwindigkeitsregelung wird im allgemeinen ein Geschwindigkeits-Istsignal aus einem Positions-Istsignal abgeleitet und mit einem Geschwindigkeits-Sollsignal verglichen. Durch die zeitliche Ableitung wird so eine Verzögerung in das System eingebracht, die sich als Phasenverschiebung oder -drehung auf die Regelstrecke nachteilig auswirkt. Ferner ist zu beachten, daß normalerweise die Positionsdaten diskret aufgenommen werden, wodurch sich ein Quantisierungsrauschen ergibt, das bei der zeitlichen Ableitung noch verstärkt wird. Entsprechende Überlegungen gelten in verstärktem Maße für eine mögliche Beschleunigungsregelung.

Entsprechende Probleme ergeben sich auch bei der sogenannten kaskadierten Regelung, bei der mehrere Regler hintereinandergeschaltet sind, beispielsweise eine Lagereglung, eine Geschwindigkeitsregelung und eine Beschleunigungsregelung.

Zwar läßt sich die Regelgenauigkeit durch Einsatz einer sogenannten Vorsteuerung, bei der beispielsweise dem Geschwindigkeitsregler zusätzlich ein aus den Sollwerten abgeleitetes Geschwindigkeitsvorsteuersignal zugeführt wird, noch weiter steigern, die oben dargestellten Probleme hinsichtlich der Phasendrehung, Phasenverschiebung und der Verzögerung bleiben jedoch erhalten.

Der Erfindung liegt somit die Aufgabe zugrunde, eine Regeleinrichtung für einen Motor zu schaffen, die eine schnelle und genaue Regelung des Bewegungszustandes des Motors ermöglicht; desweiteren soll ein entsprechendes Verfahren zur Regelung eines Motors geschaffen werden.

Diese Aufgabe wird durch eine Regeleinrichtung gemäß Anspruch 1 bzw. durch ein Verfahren zur Regelung eines Motors gemäß Anspruch 11 gelöst; die abhängigen Ansprüche betreffen weitere Entwicklungen der Erfindung.

Erfindungsgemäß ist der Sensor zur Erfassung des Bewegungszustandes des Motors an der Kraftübertragungsstelle des Motors angeordnet. Auf diese Weise können alle Änderungen des Bewegungszustandes des Motors direkt erfaßt und dem Regler zugeführt werden, so daß eine unmittelbare Regelung möglich ist, die im wesentlichen frei von mechanischen Einflüssen und/oder Einflüssen der Regeleinrichtung wie Differenzierung etc. ist.

Der Sensor erfaßt direkt zumindest einen Zustandsparameter des Kraftübertragungsmediums an der Kraftübertragungsstelle des Motors, beispielsweise den Druckzustand eines Fluids oder die elektrische und/oder magnetische Feldstärke eines Elektromotors, d.h. des Feldes, das auch der Kraftübertragung im Motor dient. Dieser Zustandsparameter ist unmittelbar eine Maßgabe für den Bewegungszustand bzw. für Änderungen des Bewegungszustandes des Motors; zu diesem Zweck ist der Sensor im weitesten Sinne "im" Kraftübertragungsmedium des Motors angeordnet.

Der Sensor kann ein Winkellagengeber, ein Winkelgeschwindigkeitsgeber oder ein Winkelbeschleunigungsgeber im Fall eines Rotationsmotors sein oder ein Weggeber, ein Geschwindigkeitsgeber und/oder ein Beschleunigungsgeber im Fall eines Linearmotors.

Bei dem erfindungsgemäßen Verfahren wird der Bewegungszustand des Motors unmittelbar an der Kraftübertragungsschnittstelle ermittelt, und zwar vorteilhafterweise über das Kraftübertragungsmedium.

Das Regelungsverfahren kann dabei vorteilhafterweise mit einer Kaskadenregelung mit einer Geschwindigkeits- und/oder Beschleunigungsreglung kombiniert werden; auch ist es möglich, eine Geschwindigkeits- und/oder Beschleunigungsvorsteuerung einzusetzen.

Ausführungsbeispiele der Erfindung werden anhand der beigefügten Zeichnungen erläutert. Es zeigen:
- Fig. 1: eine schematische Darstellung einer CNC-gesteuerten Werkzeugmaschine mit einem Linearmotor,
- Fig. 2: eine schematisch Darstellung eines erfindungsgemäßen Reglers, und
- Fig. 3: eine weitere schematische Darstellung einer CNC-Maschine mit Linearmotor.

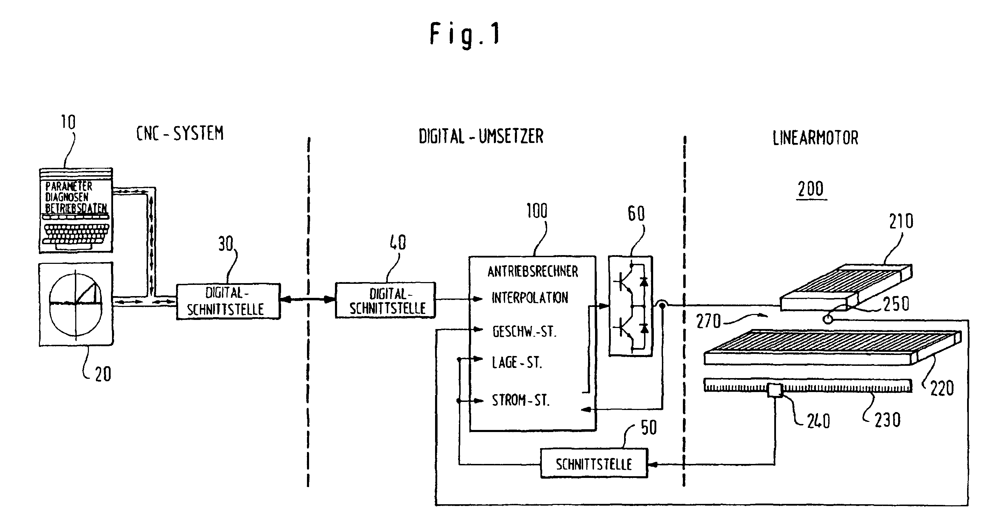

In Fig. 1 bezeichnet 10 einen Maschinenrechner zur Steuerung der CNC-Maschine. Der Maschinenrechner 10 kommuniziert mit einem Datenträger 20, der beispielsweise Vorgabedaten zur Steuerung eines Fräskopfes (nicht dargestellt) enthält. Über eine Schnittstelle 30 und eine Schnittstelle 40 werden die Vorgabedaten einem Antriebsrechner 100 zugeführt. Der Antriebsrechner steuert über eine Endstufe 60 einen schematisch dargestellten Linearmotor 200.

Der Linearmotor 200 umfaßt in bekannter Weise ein Primärteil (Reaktionsteil) 210 und ein Sekundärteil (Ständer) 220. Schematisch dargestellt sind ein Linearmaßstab 230 und ein Weggeber 240. An oder in der Kraftübertragungsschnittstelle des Linarmotors, nämlich dem Luftspalt zwischen dem Primär- und dem Sekundärteil, ist ein Sensor 250 zur direkten Erfassung der Geschwindigkeit vorgesehen. Die Geschwindigkeitserfassung kann beispielsweise direkt aus dem zeitlichen Verlauf des Magnetfeldes am Ort des Sensors abgeleitet werden.

Die Sensoren 250 und 240 geben ihre Signale an den Antriebsrechner 100, der eine Geschwindigkeitssteuerung, Lagesteuerung bzw. Stromsteuerung vornimmt.

Der Linearmaßstab ist in Fig. 1 separat vom Linearmotor dargestellt, er kann sich jedoch ebenfalls am Ort der Kraftübertragungsschnittstelle, d. h. im Luftspalt zwischen den Motorteilen befinden. Auch für den Linearmaßstab bzw. den Wegsensor können die Eigenschaften des Kraftübertragungsmediums, d. h. des elektromagnetischen Feldes, ausgenutzt werden.

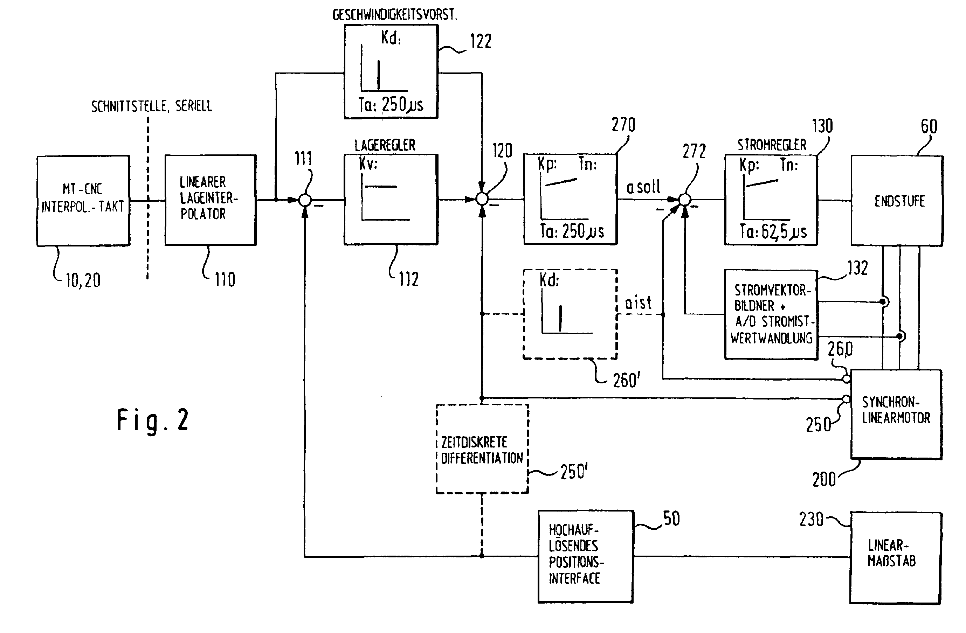

Fig. 2 zeigt im größeren Detail ein Beispiel für den Aufbau der im Arbeitsrechner 100 ablaufenden Motorregelung.

Von dem Maschinenrechner 10 bzw. dem Datenträger 20 werden die Vorgabedaten an einem linearen Lageinterpolierer 110 gegeben. Diese Daten werden einem Subtraktionsglied 111 zugeführt, dessen invertierendem Eingang die Lage-Ist-Daten vom Linearmaßstab 230 über eine hochauflösendes Positionsschnittstelle 50 zugeführt werden. Anschließend wird die Differenz einem Lageregler 112 zugeführt, dessen Ausgangsdaten einem weiteren Subtraktionsglied 120 zugeführt werden. Zur Bildung der Geschwindigkeitsdifferenz wird bei der bekannten Technik das Ausgangssignal der Positionsschnittstelle 50 in einem Differenzierglied 250' differenziert und dem Substraktionsglied 120 zugeführt. Dem Subtraktionsglied schließt sich eine Schaltung zur Ermittlung der Beschleunigungsabweichung an, und zwar wird in einer Schaltung 270 die Sollbeschleunigung ermittelt, von der die Istbeschleunigung subtrahiert wird, die durch eine weiteres Differenzierglied 260' abgeleitet wurde. Ein anschließender Regelteil aus einem Stromregler 130, einer Endstufe 60 und einem Stromvektorbildner 132 bildet daraus den Antriebsstrom für den Synchronlinearmotor 200.

Die dargestellte Regelung stellt somit eine kaskadierte Regelung dar, wobei zusätzlich noch eine Geschwindigkeitsvorsteuerung 122 vorgenommen werden kann, bei der zusätzlich ein Geschwindigkeitsvorsteuersignal auf das Subtrahierglied 120 gegeben wird.

Da die Informationen hinsichtlich des Geschwindigkeits-Istwertes und des Beschleunigungs-Istwertes über Differenzierglieder 250' und 260' ermittelt werden, ergeben sich neben den mechanischen Beeinflussungen des Regelsystems auch negative Einflüsse wegen Signalverzögerungen, Phasendrehungen etc.

Aufgrund dessen weicht das erfinderische Regelschema von dem oben dargestellten Regelschema dadurch ab, daß anstatt des Differenziergliedes 250' ein zusätzlicher Sensor 250 direkt am oder im Synchronlinearmotor vorgesehen ist. Dieser Sensor 250 ermittelt unmittelbar die Geschwindigkeit des Primärteils des Motors und leitet ein entsprechendes Signal an das Subtrahierglied 120.

Auch für die Beschleunigungsmessung kann ein separater Beschleunigungssensor 260 vorgesehen sein, der ohne Differenzierung das Beschleunigungssignal an das Subtrahierglied 272 abgibt, so daß auf das Differenzierglied 260' verzichtet werden kann. Erfindungsgemäß werden somit die Differenzierglieder 250', 260' durch entsprechende Sensoren 250, 260, die direkt den Bewegungszustand des Motors erfassen, ersetzt.

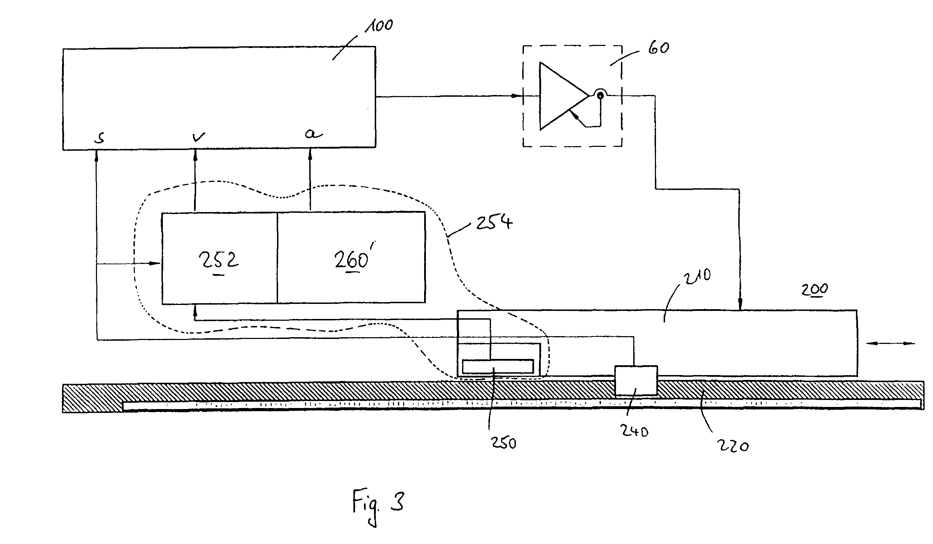

Eine vorteilhafter Umsetzung des erfindungsgemäßen Prinzips ist aus der schematischen Darstellung der Figur 3 ersichtlich. Die Figur entspricht im wesentlichen der Figur 1, wobei die verschiedenen Schnittstellen weggelassen wurden.

Bei dem Ausführungsbeispiel gemäß Figur 3 ist der Geschwindigkeitssensor 250 ein Spulensensor, der in der Nähe des Luftspaltes des Linearmotors 200 angeordnet ist und das elektromagnetische Feld im Luftspalt erfaßt. Das bedeutet, daß der Sensor direkt das elektromagnetische Feld erfaßt, auf dem die Kraftübertragung des Motors beruht. In der oder den Spulen des Sensors 250 werden elektrische Spannungen induziert, die proportional zur zeitlichen Änderung des Magnetfeldes und damit (bei stationärem Magnetfeld) proportional zur Geschwindigkeit sind. Das (analoge) Signal des Spulensensors 250 wird nach einer später zu erläuternden Signalverarbeitung in einem Umsetzer 252, gegebenenfalls nach Quantisierung, als Geschwindigkeitssignal v dem Antriebsrechner 100 zugeführt. Aus dem geschwindigkeitsproportionalen Signal des Spulensensors 250 wird desweiteren über das bereits erläuterte Differenzierglied 260' ein beschleunigungsproportionales Signal a abgeleitet und ebenfalls dem Antriebsrechner 100 zugeführt. Über den Verstärker bzw. die Endstufe 60 regelt der Antriebsrechner 100 die Bewegung des Sekundärteils 210 des Linearmotors 200.

Das Ausführungsbeispiel gemäß Figur 3 hat den entscheidenden Vorteil, daß direkt ein geschwindigkeitsproportionales Signal vom Sensor 250 abgegeben wird. Es entfällt somit die Notwendigkeit, aus einem bereits diskreten Positionssignal ein weiteres, quantisiertes Geschwindigkeitssignal abzuleiten.

Obwohl bei dieser Ausführungsform ein Differenzierglied 260' für die Beschleunigungsmessung eingesetzt wird, hat diese Ausführungsform auch hinsichtlich der Beschleunigungsregelung entscheidene Vorteile. Zum einen wird die Beschleunigung nur durch einfache Differenzierung des Geschwindigkeitssignals erhalten und nicht, wie beim Stand der Technik, durch eine zweifache Differenzierung eines Positionssignals. Zum zweiten ist der Geschwindigkeitssensor 250 direkt an der Kraftschnittstelle angeordnet, und das aus dem Geschwindigkeitssignal abgeleitete Beschleunigungssignal a entspricht somit direkt der Differenzbeschleunigung zwischen dem Primärteil 210 und dem Sekundärteil 220.

Eine zweifache Beschleunigungsmessung, einerseits am Primärteil 220, andererseits am Sekundärteil 210, mit anschließender Differenzbildung zur Ermittlung der tatsächlichen Differenzbeschleunigung ist dabei nicht erforderlich.

Vorzugsweise ist bei dem Ausführungsbeispiel der Figur 3 zur Verarbeitung des Signals des Sensors 250 der schon erwähnte Signalumsetzer 252 vorgesehen, dessen Funktion im Folgenden erläutert wird. Der Spulensensor 250 ist direkt an der Kraftschnittstelle des Motors 200 angeordnet, d.h. er läuft auf der gleichen Magnetspur wie das Primärteil 210. Dabei erfaßt der Sensor nur seine lokale Umgebung, d.h. der Sensor 250 "sieht" nur einen sehr begrenzten Bereich. Bauartbedingt (abwechselnde *N*- und *S*-Magnetpole im Primärteil) und aufgrund von Fertigungstoleranzen können dabei Abhängigkeiten des an sich nur geschwindigkeitsproportionalen Signals des Sensors 250 vom Erfassungsort s auftreten, d.h. es gilt *v* = *f(s).* Wenn man somit in der Praxis den Motor beispielsweise mit einer konstanten Geschwindigkeit betreibt, d.h. den Primärteil 210 mit einer konstanten Geschwindigkeit von einem Ende des Sekundärteils 220 zum anderen Ende bewegt, wird man einer Variation des Geschwindigkeitssignals *v* in Abhängigkeit vom Ort *s* feststellen. Diese Ortsabhängigkeit des Geschwindigkeitssignals wird im Signalumsetzer 252 kompensiert.

Zu diesem Zweck wird vorteilhafterweise das Signal des Geschwindigkeitssensors 250 im Signalumsetzer 252 zunächst gleichgerichtet, und dem Geschwindigkeitsumsetzer wird zusätzlich das Signal des Weggebers 240 zugeführt. Bei einem Testlauf, bei dem der Primärteil 210 ein oder mehrere Male mit konstanter Geschwindigkeit über die gesamte Länge des Sekundärteils 220 bewegt wird, werden gleichzeitig die Geschwindigkeitsdaten des Sensors 250 und die Positionsdaten des Weggebers 240 aufgenommen und miteinander korreliert, so daß die Ortsabhängigkeit des Geschwindigkeitssignals bei einer konstanten Geschwindigkeit des Sekundärteils 210 ermittelt werden kann. Aus der Ortsabhängigkeitsfunktion *v*(*s*) des Geschwindigkeitssignals wird anschließend in bekannter Weise eine Korrekturfunktion *v**(*s*) ermittelt, die angibt, in welcher Weise das Signal des Sensors 250 korrigiert werden muß, um bei konstanter Geschwindigkeit ein an allen Orten konstantes Geschwindigkeitssignal zu ermitteln. Die Wertepaare *s*_{*i*}, *v**_{*i*}, zu jedem Ortspunkt können dann beispielsweise in einer Nachschlagtabelle im Signalumsetzer 252 abgelegt werden, so daß bei der späteren Regelung zu jedem Ortspunkt *s*_{*i*} der entsprechende Korrekturwert *v**_{*i*} abgerufen werden kann und das Signal des Geschwindigkeitssensors 250 in einer nicht dargestellten Auswertelogik entsprechend korrigiert werden kann. Die Einzelheiten, wie eine derartige Auswertelogik aufzubauen ist und wie eine Nachschlagtabelle im Signalumsetzer 252 mittels eines Speichers zu realisieren ist, sind dem Fachmann geläufig und werden deshalb nicht näher dargestellt. Dabei ist es auch grundsätzlich möglich, die Korrekturfunktion *v** (*s*) nicht als Nachschlagtabelle abzulegen sondern über einen Funktionsgenerator zu generieren, der die Funktion *v**(*s*) möglichst genau wiedergibt, beispielsweise durch angepaßte trigonometrische Funktionen od.dgl.

Schließlich sei noch erwähnt, daß der Signalumsetzer 252, das Differenzierglied 260' und der Sensor 250 zu einer Einheit zusammengefaßt werden können, wie durch die gestrichelte Linie 254 in Figur 3 angedeutet ist. Diese Einheit 254 wird dann direkt im Primärteil 210 des Motors 200 integriert, so daß der Motor 200 nur noch Anschlüsse für das Positionssignal *s*, das Geschwindigkeitssignal *v* und das Beschleunigungssignal *a* nach außen aufweist. Desweiteren ist es auch möglich, die Korrekturfunktion nicht nur in einem anfänglichen Testlauf zu ermitteln sondern in zeitlichen Abständen, abhängig von dem Einsatz des Motors. So kann die Korrekturfunktion beispielsweise in regelmäßigen Intervallen oder immer zum Betriebsbeginn automatisch aktualisiert werden, um so allmähliche Veränderungen, z.B. aufgrund von Verschleiß, berücksichtigen zu können.

## Patentansprüche

1. Regeleinrichtung für einen Motor (200), wobei der Motor (200) zumindest zwei Motorteile (210, 220) aufweist, die über eine Kraftübertragungsschnittstelle (270) miteinander wechselwirken und relativ zueinander bewegbar sind, einem Sensor (250) zur Erfassung des Bewegungszustandes der Motorteile und einem Regler (100) zur Regelung des Bewegungszustandes des Motors abhängig von Signalen des Sensors, wobei der Sensor der Kraftübertragungsschnittstelle (270) des Motors (200) zugeordnet ist und zumindest einen Zustandsparameter des Kraftübertragungsmediums des Motors erfasst,
**gekennzeichnet durch** einen Signalumsetzer (252), der mit einem Weggeber (240) und mit dem Sensor (250) zur Erfassung des Bewegungszustandes verbunden ist und Speicher- und Korrekturmittel aufweist, um eine mögliche Abhängigkeit des Signals des Sensors (250) von der Position zu kompensieren.

2. Regeleinrichtung nach Anspruch 1,
**dadurch gekennzeichnet, dass** der Sensor im Kraftübertragungsmedium des Motors angeordnet ist.

3. Regeleinrichtung nach Anspruch 1 oder 2,
**dadurch gekennzeichnet, dass** das Kraftübertragungsmedium des Motors ein Fluid oder ein elektromagnetisches Feld ist.

4. Regeleinrichtung nach einem der Ansprüche 1 bis 3,
**dadurch gekennzeichnet, dass** der Motor ein Rotationsmotor ist und der Sensor ein Winkellagengeber, ein Winkelgeschwindigkeitsgeber und/oder ein Winkelbeschleunigungsgeber ist.

5. Regeleinrichtung nach einem der Ansprüche 1 bis 4,
**dadurch gekennzeichnet, dass** der Motor ein Linearmotor ist und der Sensor ein Weggeber, ein Geschwindigkeitsgeber und/oder ein Beschleunigungsgeber ist.

6. Regeleinrichtung nach einem der Ansprüche 4 oder 5,
**dadurch gekennzeichnet, dass** der Sensor das elektromagnetische Feld oder Änderungen des elektromagnetischen Feldes erfasst, auf das sich die Kraftübertragung des Motors stützt.

7. Regeleinrichtung nach Anspruch 6,
**dadurch gekennzeichnet, dass** der Sensor (250) ein Induktionssensor ist.

8. Regeleinrichtung nach Anspruch 7,
**dadurch gekennzeichnet, dass** der Sensor (250) eine oder mehrere Spulen aufweist.

9. Verfahren zur Regelung eines Motors, wobei der Motor zumindest zwei Motorteile aufweist, die über eine Kraftübertragungsschnittstelle miteinander wechselwirken und relativ zueinander bewegbar sind, wobei man den Bewegungszustand des Motors mit einem Induktionssensor an der Kraftübertragungsschnittstelle des Motors durch Zustandsparameter des Kraftübertragungsmediums des Motors in Form eines geschwindigkeitsproportionalen Signals erfasst, **dadurch gekennzeichnet, dass** man vor Inbetriebnahme des Motors in einem Testablauf den Motor ein oder mehrere Male mit konstanter Geschwindigkeit betreibt und ein geschwindigkeitsproportionales Signal in Abhängigkeit von der momentanen Position des Motors aufnimmt, dass man aus dem momentanen geschwindigkeitsproportionalen Signal (v) und den Signalen über den momentanen Ort (s) eine Korrekturfunktion (v*(s)) ermittelt und dass man das Signal des Induktionssensors (250) mittels der Korrekturfunktion derart kompensiert, dass Abhängigkeiten der Signale des Induktionssensors (250) von der Position (s) des Motors ausgeglichen werden.

10. Verfahren nach Anspruch 9,
**dadurch gekennzeichnet, dass** man den Druck eines Fluids oder Druckänderungen oder die Stärke eines elektromagnetischen Feldes oder Feldänderungen an der Kraftübertragungsschnittstelle des Motors erfasst.

11. Verfahren nach einem der Ansprüche 9 oder 10,
**dadurch gekennzeichnet, dass** man die Winkellage der Motorteile, die Winkelgeschwindigkeit und/oder die Winkelbeschleunigung an der Kraftübertragungsschnittstelle erfasst.

12. Verfahren nach einem der Ansprüche 9 bis 11,
**dadurch gekennzeichnet, dass** man einen linearen Weg, eine Lineargeschwindigkeit und/oder eine Linearbeschleunigung an der Kraftübertragungsschnittstelle des Motors erfasst.

13. Verfahren nach einem der Ansprüche 9 bis 12,
**dadurch gekennzeichnet, dass** eine Lagenregelung und eine Geschwindigkeitsregelung kaskadiert sind.

14. Verfahren nach Anspruch 13,
**dadurch gekennzeichnet, dass** man eine Geschwindigkeitsvorsteuerung vornimmt.

15. Verfahren nach Anspruch 13 oder 14,
**dadurch gekennzeichnet, dass** man eine kaskadierte Regelung mit einer Beschleunigungsregelung vornimmt.

16. Verfahren nach Anspruch 15,
**dadurch gekennzeichnet, dass** man eine Beschleunigungsvorsteuerung vornimmt.

17. Verfahren nach einem der Ansprüche 9 bis 16,
**dadurch gekennzeichnet, dass** der Sensor zum Erfassen des Bewegungszustandes des Motors ein Induktionssensor, vorzugsweise einem Sensor (250) mit einer oder mehreren Spulen, ist.

18. Verfahren nach Anspruch 17,
**dadurch gekennzeichnet, dass** das geschwindigkeitsproportionale Signal einer Geschwindigkeitsregelung zugeführt wird und dass das geschwindigkeitsproportionale Signal nach zeitlicher Differenzierung einer Beschleunigungsregelung zugeführt wird.

19. Verfahren nach Anspruch 9,
**dadurch gekennzeichnet, dass** die Korrekturfunktion (v*(s)) in Form einer Nachschlagtabelle abgespeichert oder in Form einer Näherungsfunktion generiert wird.

20. Verwendung einer Regeleinrichtung nach einem der Ansprüche 1 bis 8 oder eines Regelverfahrens nach einem der Ansprüche 9 bis 19, bei einem Translationsantrieb einer Werkzeugmaschine, eines Bestückungsautomaten, eines Bondingautomaten oder dergleichen.

## Claims

1. Control device for a motor (200), said motor (200) having at least two motor parts (210, 220), which interact with each other via a force transmission interface (270) and can be moved relative to each other, a sensor (250) for detecting the state of movement of the motor parts and a controller (100) for controlling the state of movement of the motor as a function of sensor signals, said sensor being associated with the force transmission interface (270) of the motor (200) and detecting at least one state parameter of the force transmission medium of the motor,
**characterised by** a signal converter (252), which is connected to a displacement pickup (240) and the sensor (250) for detecting the state of movement and has storage and correction means to compensate for possible dependence of the signal of the sensor (25) on the position.

2. Control device according to Claim 1,
**characterised in that** the sensor is arranged in the force transmission medium of the motor.

3. Control device according to Claim 1 or 2,
**characterised in that** the force transmission medium of the motor is a fluid or an electromagnetic field.

4. Control device according to one of Claims 1 to 3,
**characterised in that** the motor is a rotary motor and the sensor an angular position pickup, an angular speed pickup and/or an angular acceleration pickup.

5. Control device according to one of Claims 1 to 4,
**characterised in that** the motor is a linear motor and the sensor a displacement pickup, a speed pickup and/or an acceleration pickup.

6. Control device according to one of Claims 4 or 5,
**characterised in that** the sensor detects the electromagnetic field or changes in the electromagnetic field, which forms the basis for the force transmission of the motor.

7. Control device according to Claim 6,
**characterised in that** the sensor (250) is an induction sensor.

8. Control device according to Claim 7,
**characterised in that** the sensor (250) has one or more coils.

9. Method for controlling a motor, said motor having at leas two motor parts, which interact with each other via a force transmission interface and can be moved relative to each other, the state of movement of the motor being detected using an induction sensor at the force transmission interface of the motor by means of state parameters of the force transmission medium of the motor in the form of a speed-proportional signal, **characterised in that** before start-up of the motor, the motor is operated in a test run at least once at constant speed and a speed-proportional signal is recorded as a function of the current position of the motor, a correction function (v*(s)) is determined from the current speed-proportional signal (v) and the signals relating to the current position (s) and the signal of the induction sensor (250) is compensated for using the correction function such that dependences of the signals of the induction sensor (250) on the position (s) of the motor are offset.

10. Method according to Claim 9,
**characterised in that** the pressure of a fluid or pressure changes or the strength of an electromagnetic field or field changes is/are detected at the force transmission interface of the motor.

11. Method according to one of Claims 9 or 10,
**characterised in that** the angular position of the motor parts, the angular speed and/or the angular acceleration is/are detected at the force transmission interface.

12. Method according to one of Claims 9 to 11,
**characterised in that** linear displacement, linear speed and/or linear acceleration is/are detected at the force transmission interface of the motor.

13. Method according to one of Claims 9 to 12,
**characterised in that** position control and speed control are cascaded.

14. Method according to Claim 13,
**characterised in that** a speed pilot control is implemented.

15. Method according to Claim 13 or 14,
**characterised in that** a cascade control is implemented in conjunction with an acceleration control.

16. Method according to Claim 15,
**characterised in that** an acceleration pilot control is implemented.

17. Method according to one of Claims 9 to 16,
**characterised in that** the sensor for detecting the state of movement of the motor is an induction sensor, preferably a sensor (250) having one or more coils.

18. Method according to Claim 17,
**characterised in that** the speed-proportional signal is supplied to a speed control and the speed-proportional signal is supplied to an acceleration control after time-based differentiation.

19. Method according to Claim 9,
**characterised in that** the correction function (v*(s)) is stored in the form of a reference table or is generated in the form of an approximation function.

20. Use of a control device according to one of Claims 1 to 8 or a control method according to one of Claims 9 to 19, in the translational drive of a tool machine, a pick-and-place robot, an automatic bonding machine, etc.

## Revendications

1. Dispositif de régulation pour un moteur (200), le moteur (200) comportant au moins deux parties (210, 220) de moteur qui peuvent être mises en mouvement en interaction rune avec l'autre et l'une par rapport à l'autre par l'intermédiaire d'une interface (270) de transmission de force, comportant un capteur (250) pour détecter l'état de déplacement des parties du moteur et un régulateur (100) pour réguler l'état de déplacement du moteur en fonction de signaux du capteur, le capteur étant associé à l'interface (270) de transmission de force du moteur (200) et détectent au moins un paramètre d'état de l'agent de transmission de force du moteur,
**caractérisé par** un convertisseur (252) de signaux qui est relié à un indicateur (240) de déplacement et au capteur (250) servant à détecter l'état de déplacement et comporte des moyens d'enregistrement et de correction pour compenser une dépendance éventuelle du signal du capteur (250) vis-à-vis de la position.

2. Dispositif de régulation suivant la revendication 1, **caractérisé en ce que** le capteur est monté dans le moyen de transmission de force du moteur.

3. Dispositif de régulation suivant la revendication 1 ou 2, **caractérisé en ce que** l'agent de transmission de force du moteur est un fluide ou un champ électromagnétique.

4. Dispositif de régulation suivant l'une des revendications 1 à 3, **caractérisé en ce que** le moteur est un moteur à cylindre rotatif et **en ce que** le capteur est un indicateur de position angulaire, un indicateur de vitesse angulaire et/ou un indicateur d'accélération angulaire.

5. Dispositif de régulation suivant l'une des revendications 1 à 4, **caractérisé en ce que** le moteur est un moteur linéaire et **en ce que** le capteur est un indicateur de déplacement, un indicateur de vitesse et/ou un indicateur d'accélération.

6. Dispositif de régulation suivant l'une des revendications 4 ou 5, **caractérisé en ce que** le capteur détecte le champ électromagnétique ou des variations du champ électromagnétique sur lequel s'appuie la transmission de force.

7. Dispositif de régulation suivant la revendication 6, **caractérisé en ce que** le capteur (250) est un capteur à induction.

8. Dispositif de régulation suivant la revendication 7, **caractérisé en ce que** le capteur (250) comporte une ou plusieurs bobines.

9. Procédé de régulation d'un moteur, le moteur comportant au moins deux parties de moteur qui peuvent être déplacées en interaction l'une avec l'autre ou l'une par rapport à l'autre par l'intermédiaire d'une interface de transmission de force, dans lequel on détecte l'état de déplacement du moteur par un capteur à induction sur l'interface de transmission de force du moteur par des paramètres d'état de l'agent de transmission de force du moteur sous la forme d'un signal proportionnel à la vitesse, **caractérisé en ce que**, avant la mise en marche du moteur, on fait fonctionner le moteur dans une opération de test une ou plusieurs fois à vitesse constante et on enregistre le signal proportionnel à la vitesse en fonction de la position instantanée du moteur, **en ce que** l'on détermine à partir du signal (v) instantané proportionnel à la vitesse et des signaux concernant la position (s) instantanée une fonction (v*(s)) de correction et **en ce que** l'on compense le signal du capteur (250) au moyen de la fonction de correction de telle manière que des dépendances des signaux du capteur (250) à induction vis-à-vis de la position (s) du moteur sont compensées.

10. Procédé suivant la revendication 9, **caractérisé en ce que** l'on détecte la pression d'un fluide ou des variations de pression ou l'intensité d'un champ électromagnétique ou des variations de champ sur l'interface de transmission de force du moteur.

11. Procédé suivant l'une des revendications 9 ou 10, **caractérisé en ce que** l'on détecte la position angulaire des parties du moteur, la vitesse angulaire et/ou l'accélération angulaire sur l'interface de transmission de force.

12. Procédé suivant l'une des revendications 9 à 11, **caractérisé en ce que** l'on détecte un trajet linéaire, une vitesse linéaire et/ou une accélération linéaire sur l'interface de transmission de force du moteur.

13. Procédé suivant l'une des revendications 9 à 12, **caractérisé en ce qu'**une régulation de position et une régulation de vitesse sont effectuées en cascade.

14. Procédé suivant la revendication 13, **caractérisé en ce que** l'on effectue une précommande de vitesse.

15. Procédé suivant la revendication 13 ou 14, **caractérisé en ce que** l'on effectue une régulation en cascade avec une régulation d'accélération.

16. Procédé suivant la revendication 15, **caractérisé en ce que** l'on effectue une précommande d'accélération.

17. Procédé suivant l'une des revendications 9 à 16, **caractérisé en ce que** le capteur de détection de l'état de déplacement du moteur est un capteur à induction, de préférence un capteur (250) comportant une ou plusieurs bobines.

18. Procédé suivant la revendication 17, **caractérisé en ce que** le signal proportionnel à la vitesse est envoyé à une régulation de vitesse et **en ce que** le signal proportionnel à la vitesse est envoyé à une régulation d'accélération après dérivation par rapport au temps.

19. Procédé suivant la revendication 9, **caractérisé en ce que** la fonction (v*(s)) de correction est enregistrée dans une table à consulter ou générée sous la forme d'une fonction d'approximation.

20. Utilisation d'un dispositif de régulation suivant l'une des revendications 1 à 8 ou d'un procédé de régulation suivant l'une des revendications 9 à 19 dans un dispositif d'entraînement en translation d'une machine-outil automatique à équiper les plaques imprimées, d'une machine automatique de bonding ou analogue.
